# EUROPEAN PATENT APPLICATION

(11) **EP 3 912 807 A1**
(43) Date of publication of application: **24.11.2021**
(21) Application number: 20175345.6
(22) Date of filing: 19.05.2020
(51) Int. Cl.: B32B 17/10

(54) **PRINTED INTERLAYER FILMS FOR LAMINATED GLAZING WITH IMPROVED NIR TRANSPARENCY**

(71) Applicant: Kuraray Europe GmbH, 65795 Hattersheim (DE)
(72) Inventor: Keller, Uwe, 77210 Avon (FR); Yasuda, Hirotaka, 53840 Troisdorf (DE)
(74) Representative: Janßen, Christian Oliver

(57) **Abstract**

The present invention relates to interlayer films for laminated glazing, in particular windscreens, which have a printed, non-transparent region highly transparent for NIR and/or IR radiation.

## Description

The present invention relates to interlayer films for laminated glazing, in particular windscreens, which have a printed, non-transparent region highly transparent for NIR and/or IR radiation.

Polyvinyl butyral (PVB) films as interlayers for laminated glazing are offered either transparent or fully or partially coloured. In particular, interlayer films for automotive windscreens are often partially tinted, i.e. equipped with a so-called color band or shade band in the upper area of the window to minimize the glare caused by sunlight.

For uniformly coloured PVB films, the colouring agent (pigment or dye) is added to the PVB compound before extrusion. In the production of ribbon films, a transparent main stream and a coloured side stream are usually brought together and coextruded in the extrusion die via two appropriately sized extruders. Processes of this type are known and are disclosed e.g. in EP 0 111 678 B1.

The dyes or pigments used must have sufficient solubility or dispersibility in the plasticized PVB resin and, at the same time, have sufficient UV stability. As an excellent light-stable pigment, colored carbon black is used for the colored ribbon of the PVB film.

The disadvantage of carbon black and other typically used dyes and pigments is that they absorb far into the NIR or IR range.

Vehicles are often equipped with sensors which detect, for example, raindrops on the windscreen by absorbing water in the NIR range, thus allowing automatic control of the windscreen wiper function.

More importantly, autonomous vehicles may use LIDAR (light detection and ranging) systems for obstacle detection and avoidance to navigate safely through environments, using scanning laser beams. LIDAR systems generally work in the NIR or IR range.

What these systems have in common is that the windshield and thus, also the PVB film embedded therein, must be transparent in the IR or NIR range. Attenuation or reflection of NIR or IR radiation by absorption in the PVB film considerably impairs the function of such sensors and would constitute a severe safety hazard.

A technical solution would be to make a cut-out in the ribbon, which is then filled again with clear PVB film. Alternatively, the pigments could be bleached locally afterwards. Both variants are very costly.

DE 10 2008 000 685 A1 suggests to add non-NIR and/or non-IR absorbing pigments directly into the interlayer films used for bonding the two panes of glass together. However, this technology has the disadvantage that the comparatively expensive pigments have to be used for the whole film in the tinted area, which again makes this technology rather costly.

Accordingly, the objective of the present invention is to provide windscreens with NIR and/or IR transparent obscuration areas with improved characteristics, wherein the improvements include better processibility, lower manufacturing costs and/or higher optical quality of the detection area.

In a first aspect, the present invention concerns a laminated glass comprising two sheets of glass, combined by an adhesive film comprising a film A containing a polyvinyl acetal PA and less than 10 % by weight plasticiser and a film B containing polyvinyl acetal PB and at least 22 % by weight plasticiser; characterised in that
- film A is provided with an obscuration area (1) having at least one area (2) embedded therein
   o wherein obscuration area (1) and the at least one area (2) have a transmission in the visible spectrum from 380 nm to 780 nm of less than 20% and
   o wherein the at least one area (2) has a transmission for infrared radiation from 850 nm to 1200 nm of more than 80% and
   o wherein the obscuration of the obscuration area (1) and the obscuration of the at least one area (2) are provided by a printed or coated layer on at least one surface of film A.

The amounts specified for content of plasticizer and other ingredients in the separate films shall refer to the state "prior to lamination", i.e. refers to the state of the films A and B prior to having any contact to each other. For example, the term refers to the composition of each film separately formed and separately wound to individual rolls.

Preferably, the obscuration area (1) and the at least one area (2) have a transmission in the visible spectrum from 380 nm to 780 nm of less than 20%, more preferably 10% and most preferably less than 5%. Also preferably, the obscuration area has an L* value in the L,a,b system of less than 10, more preferably less than 8, even more preferably less than 5. The obscuration area and/or the area (2) appear grey or black. Alternatively, they can also be coloured.

Also preferably, the at least one area (2) has a transmission for infrared radiation from 850 nm to 1200 nm of more than 50%, more preferably more than 70% and even more preferably more than 80%, most preferably more than 90%.

The at least one area (2) within the obscuration area may be provided with detection devices positioned at or on one surface of a glass sheet which operate in the IR and/or NIR range, most preferably with LIDAR devices. Since the at one area (2) has a reduced transmission in the visible spectrum of the light, the such systems cannot be seen from outside of the car, adding to an improved appearance of the windshield, while the systems can still operate since the area has sufficient transmission in the IR and/or NIR range.

The present invention is also advantageous for laminates comprising thin glass sheets, since sintering enamels on thin glass is even more prone to produce off-spec bended sheets with optical flaws. In a preferred embodiment of the invention, at least one of the glass sheets has a thickness of less than 2.1 mm, such as 1.8 mm, less than 1.8 mm; less than 1.6 mm; less than 1.4 mm; less than 1.0 mm; or less than 0.9 mm. The term "glass sheet" shall be read as any material useful for the production of windshield, including polycarbonate sheet.

Preferably, the obscuration of the obscuration area (1) and of the at least one area (2) is provided by a printed layer on at least one surface of film A and the printed layer comprises a dried ink. More preferably, the printed layer in the obscuration area (1) comprises a different printing ink than the printed area in the at least one area (2). Thus, the printed area (2) can be printed with the relatively expensive inks with good IR/NIR transmission properties while the usually much larger obscuration area (1) can be printed or coated with a normal ink.

Black or dark green or dark violet or dark blue tinting pigments such as perylene pigments are particularly suitable. Perylene pigments are known with many substitution patterns, e.g. from DE 102004007382 A1, and are used as paint additive and dye for polymers. One well-known representative of this group of substances is Perylene Black S-1086. Related commercial products are available from BASF under the name of Paliogen® L 0086, Lumogen® Black K 0087, Lumogen® Black K 0088. Epolight 7276 A/B is a representative of another class of NIR transparent black / dark violet dyes and available from Epolin USA. Black IR transparent azo pigments, e.g. such as described in US6623556B2 are similarly suitable as are dark violet coloured dioxazine dies.

To set a specific color tone and the desired light transmission in the visible range, the NIR-transparent pigments can be combined with other dyes or pigments.

Examples of organic dyes that can be used are, for example, dyes from the Macrolex® series from Bayer, which includes anthraquinone derivatives, or dyes from the Waxoline® series from Zeneca Colours, which includes quinoline derivatives. Suitable organic pigments are e.g. quinacridones or phthalocyanines from various manufacturers. As an example of an inorganic pigment, besides the common metal oxide derivatives, colored carbon black can be mentioned if it is used in such small quantities that a sufficiently high transmission in the NIR range is maintained. Other suitable pigments or dyes are, for example, quinophthalones, pyrazolones, anthraquinones, perinones, monoazo dyes, phthalocyanines, perylenes, azo pigments, cromophthales, thioindigo pigments, dioxazines, diketopyrrolopyrroles, benzimidazolones, isoindolines, indanthrones, metal oxides, sulfides, chromates and carbon (carbon black). Since the colorants described are often not used alone but as one of several components to achieve a desired color impression, the quantity used may be very small if the colorant is only a minor component. Particularly suitable are the dyes of the Macrolex series, e.g. Macrolex blue RR, Macrolex violet 3R from Bayer AG or Waxoline Yellow 3GP IFW from Zeneca.

Typical application concentrations of the perylene pigments or all the colouring compounds used are in the range from 0.001 g/m2 to 10 g/m2, preferably 0.001 to 5 g/m2, particularly preferably 0.001 to 1.5 g/m2, based on the printed or coated surface.

Most preferably, the ink comprises a perylene pigment, more preferably N,N'-dimethylperylenedicarboxylic acid diimide (MPTCDI) or perylene tetracarboxylic acid dianhydride (PTCDA).

Also preferably, the obscuration area (1) has at least one area (3) with a transmission in the visible spectrum from 380 nm to 780 nm of more than 80% embedded therein. Thus, this area (3) is at least partially translucent to visible lights which makes it possible to operate camera systems and optical sensors being this area (3).

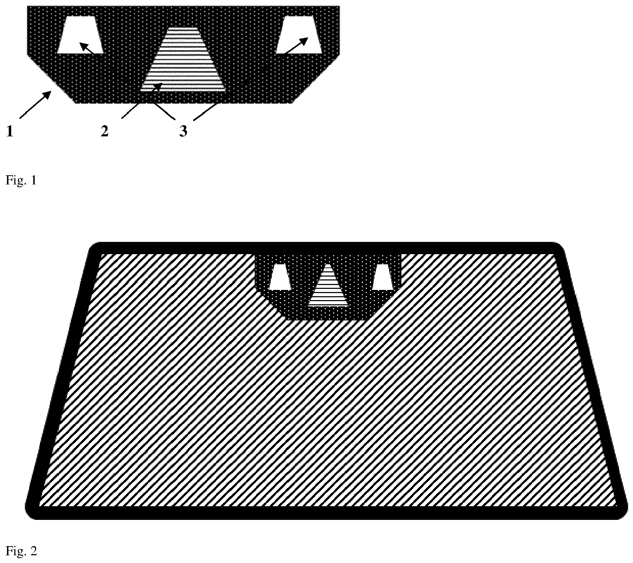

Fig. 1 shows an obscuration area (1) with two areas (2) and transparent area (3). The transparent area (3) preferably has a light transmission in the visible spectrum not less than the rest of the laminate which is not covered by the obscuration area (1).
Fig. 2 shows a windshield including an obscuration area according to Fig. 1.

### Film A

The obscuration area having at least one area (2) is provided by a printed or coated layer on at least one surface of film A and wherein the transparent areas are not provided with a printed or coated layer.

The printed or coated layer contains an inorganic or organic pigment, which should not dissolve in the polymer matrix and thus resist migration from film A to B.

As pigments, preferable carbon black, iron oxides, polyaniline, perylenes or spinel pigments are used. The pigments may be dispersed in a carrier fluid like water, alcohol or mixtures of alcohol and water. Furthermore, binders like polyvinylalcohol, polyvinylbutyral, polyvinylpyrrolidone, polyacrylates, polyurethanes or poly styrene-acrylate may be present. Such printing compositions are referred to as "printing inks" or simple "inks" hereinafter.

Water-based printing inks are preferred over printing inks based on organic solvents since they do not swell or dissolve the film A and/or lead to film defects. Printing inks based on organic solvents can be used if the coating is thin and/or the drying step is fast such that the solvent does not migrate into the PVB film.

The printing inks can be formulated and applied via techniques that are commonly known in the printing industry such as offset printing, rotogravure printing, flexography, and screen-printing, followed usually by a drying step.

The obscuration area can be completely opaque and/or in part interrupted and/or have a transition area from a completely opaque edge into the non-printed transparent area. Interrupted printing may be achieved in form of dotted patterns. The pigmented band may continuously fade-in from transparent to opaque black or grey (without recurring to easily visible dots).

In order to avoid wrinkling and or deformation of film A due to excessive heating in a drying step of the printing or coating process, it is crucial, that film A will not be exposed to temperatures above its glass transition temperature as measurable as Tg by DSC method. It is thus preferred, that the temperature of film A during the drying step is kept below Tg of the film by at least 3 °C or at least 5 °C or at least 10 °C or at least 15 °C or most preferred or at least by 20 °C.

The dry-film thickness of the printed parts is between 1-50 µm depending on printing technique and required opacity. Usually the dry-film thickness is between 2-20 µm. High enough total dry-film thicknesses can be achieved by overlaying ink-layers through repetition of sequential printing / coating steps.

Preferably, the printed-on or coated-on pigmented layer on film A will be oriented facing film B rather than the glass surface to avoid differences of adhesion between the transparent center and the printed-on edge portion of film A on the glass surface due to components of the pigmented layer.

Film A in the starting state prior to lamination may have a thickness ratio to film B of less than 0.2.

The thickness of a film A in the starting state prior to lamination is 5 - 150 µm, preferably 10 - 100 µm, preferably 20 - 60 µm and most preferably 30 - 50 µm. This range of thickness does not include additional printing layer / coating layer on the films. In the laminated glass, the thickness of the film can increase by transfer of plasticiser from film B.

Film A is produced separately from film B (for example extruded or solvent cast) and has either no plasticiser at all or sufficiently small proportion of plasticiser so that subsequent functionalization and processing is not adversely influenced.

Film A might contain alkali metal ions; potassium or sodium or lithium are preferred. Preferred ranges of concentration of the alkali metal ions are 7 - 210, preferably 14 - 140 and more preferably 21 - 140 ppm in the case of lithium, 23 - 690, preferably 46 - 460 and more preferably 69 - 460 ppm in the case of sodium and 39 - 1170, preferably 78 - 780 ppm and more preferably 117 - 780 in the case of potassium. It is furthermore preferred to add the alkali metal ions in form of salts of carboxylic acids having 1 to 10 carbon atoms. Especially preferred is potassium acetate as adhesion control agent.

The total amount of alkali metal salts may be as low as 0.005 % by weight based on the weight of film A. Preferred ranges of alkali metal salt are 0.01 % - 0.1 %; 0.02 - 0.08 %; 0.03 - 0.06 %, each weight % based on the weight of film A.

Film A used in the laminates of the invention may additionally comprise alkaline earth ions, but since their effect on adhesion is limited, only small amounts as compared to the alkali ion should be used. In a first embodiment of the invention film A comprises 0 to 20 ppm alkaline earth ions, preferable 0 to 5 ppm.

However, it is known that alkaline earth ions have a balancing effect of adhesion when a plasticized PVB film faces two glass sheets with different surface chemistry. Accordingly, in a second embodiment of the invention, film A comprises 5 - 20 ppm alkaline earth ions. The alkaline earth ions can be added in form salts of carboxylic acids having 1 to 10 carbon atoms. Especially preferred is magnesium acetate as secondary adhesion control agent. In this embodiment, the ratio of alkali ions to alkaline earth ions in ppm in film A is preferable at least than 1, especially higher than 5 and more preferred higher than 10.

In alternative to the amount of alkali and earth alkali ions, the alkaline titer of film A and B may be used to characterize the amount of anti-adhesion agents (i.e. alkali and earth alkali salts) in the films. The alkaline titer of film A may be higher than 10, higher than 20, higher than 40, higher than 50, higher than 80, higher than 90 and preferred higher than 100, in each case with a maximum value of 500. In contrast to film A, the alkaline titer of film B is preferred to be lower, and more particularly the difference between alkaline titer (film A) - alkaline titer (film B) is more than 2, 6 and preferably more than 10 AT units.

In order to avoid haze, the amount of chloride ions and/or nitrate ions and/or sulphate ions in film A may be reduced.

The chloride content of the film A can thus be less than 150 ppm, preferably less than 100 ppm, and in particular less than 50 ppm. In the ideal case, the chloride content of the film A is less than 10 ppm or even 0 ppm.

The nitrate content of film A optionally may be less than 150 ppm, preferably less than 100 ppm, and in particular less than 50 ppm. In the ideal case, the nitrate content of film A is less than 10 ppm or even 0 ppm.

Again optionally, the sulphate content of film A may be less than 150 ppm, preferably less than 100 ppm, and in particular less than 50 ppm. In the ideal case, the sulphate content of the film A is less than 10 ppm or even 0 ppm.

### Film B

Film B may be any plasticized PVB-film known in the art. The films A and B may contain, in the starting state prior to lamination and/or in a stack prepared for lamination between glass sheets, a single plasticiser as well as mixtures of plasticisers both of different and identical composition. The term "different composition" refers to both the type of plasticiser and proportion thereof in the mixture. Film A and film B after lamination, i.e. in the finished laminated glass, preferably have the same plasticisers WA and WB. In a preferred variant, film A in its starting state, however, does not contain any plasticiser and after lamination contains plasticiser WB in equilibrium amount.

Plasticiser-containing films B used in accordance with the invention contain, in the starting state prior to lamination, at least 22 % by weight, such as 22.0 - 45.0 % by weight, preferably 25.0 - 32.0 % by weight and in particular 26.0 - 30.0 % by weight plasticiser.

Films A used in accordance with the invention may contain, in the starting state prior to lamination, less than 22 % by weight (such as 21.9 % by weight), less than 18 % by weight less than 16 % by weight, less than 12 % by weight, less than 8 % by weight, less than 4 % by weight, less than 2 % by weight, less than 1 % by weight or even no plasticiser (0.0 % by weight). In a preferred embodiment of the invention, films A with a low plasticiser content preferably contain 0.0 - 8 % by weight of plasticiser, most preferred 0 - 4 wght %.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The thickness of film B in the starting state is 450 - 2500 µm, preferably 600 - 1000 µm, preferably 700 - 900 µm. A plurality of films B may be used in the invention, either being stacked on each other or separated by films A.

If films B are stretched prior to production of the sandwich and/or additionally are adapted to the shape of a screen (for example a windscreen) in a curved manner, the specified thicknesses at the moment of lamination may reduce once more by up to 20 %.

### Polyvinyl Acetal

The films A and B used in accordance with the invention contain polyvinyl acetals, which are produced by acetalisation of polyvinyl alcohol or ethylene vinyl alcohol copolymer.

The films can contain polyvinyl acetals, each having a different polyvinyl alcohol content, degree of acetalisation, residual acetate content, ethylene proportion, molecular weight and/or different chain lengths of the aldehyde of the acetal groups.

In particular, the aldehydes or keto compounds used for the production of the polyvinyl acetals can be linear or branched (that is to say of the "n" or "iso" type) containing 2 to 10 carbon atoms, which leads to corresponding linear or branched acetal groups. The polyvinyl acetals are referred to accordingly as "polyvinyl (iso)acetals" or "polyvinyl (n)acetals".

The polyvinylacetal used in accordance with the invention results in particular from the reaction of at least one polyvinyl alcohol with one or more aliphatic unbranched keto-compounds containing 2 to 10 carbon atoms. To this end, n-butyraldehyde is preferably used.

The polyvinyl alcohols or ethylene vinyl alcohol copolymers used to produce the polyvinyl acetals in the films A or B may be identical or different, pure or a mixture of polyvinyl alcohols or ethylene vinyl alcohol copolymers with different degree of polymerisation or degree of hydrolysis.

The polyvinyl acetate content of the polyvinyl acetals in the films A or B can be set by use of a polyvinyl alcohol or ethylene vinyl alcohol copolymer saponified to an appropriate degree. The polarity of the polyvinyl acetal is influenced by the polyvinyl acetate content, whereby the plasticiser compatibility and the mechanical strength of the respective layer also change. It is also possible to carry out the acetalisation of the polyvinyl alcohols or ethylene vinyl alcohol copolymers with a mixture of a number of aldehydes or keto compounds.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal PA used in film A may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

Independent of film A, the polyvinyl alcohol content of the polyvinyl acetals PB used in film B may be between 14 - 26 % by weight, 16 - 24 % by weight, 17 - 23 % by weight and preferably between 18 and 21 % by weight.

In a preferred embodiment of the invention, film A comprises a polyvinyl acetal PA with a proportion of vinyl alcohol groups from 6 to 26 % by weight and the film B comprises a polyvinyl acetal B with a proportion of vinyl alcohol groups from 14 to 26 % by weight.

The films A or B preferably contain uncross-linked polyvinyl acetal. The use of cross-linked polyvinyl acetals is also possible. Methods for cross-linking polyvinyl acetals are described, for example, in EP 1527107 B1 and WO 2004/063231 A1 (thermal self-cross-linking of polyvinyl acetals containing carboxyl groups), EP 1606325 A1 (polyvinyl acetals cross-linked with polyaldehydes) and WO 03/020776 A1 (polyvinyl acetal cross-linked with glyoxylic acid).

### Plasticizer

Films A and/or B used in accordance with the invention may contain, as plasticiser, one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

Films A in the variants in which a plasticiser WA is present in film A in the starting state, and also films B particularly preferably contain 1,2-cyclohexane dicarboxylic acid diisononyl ester (DINCH) or triethylene glycol-bis-2-ethyl hexanoate (3GO or 3G8) as plasticiser.

Film B may consist of at least two sub-films B' and B", which have a different plasticiser content.

In addition, films A and B may contain further additives, such as residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

In particular, film B may comprise 0.001 to 0.1 % by weight of alkaline metal salts and/or alkaline earth salts of carboxylic acids as adhesion control agent. It is preferred that film B contains magnesium ions in an amount of at least 10 ppm, preferably 20 ppm and most preferably 30 ppm.

### Lamination Process

The present invention also relates to a method for producing the described glass laminates, in which the film A is positioned on a glass sheet, then covered by at least one film B, and a second glass sheet is then applied.

Alternatively, it is possible for film B to be positioned on a glass sheet, then to be covered by at least one film A, and for a second glass sheet to be applied.

The present invention relates furthermore to a method for producing a laminated glass wherein a stack comprising at least one film A and at least one film B is provided, the stack is positioned on a first glass sheet and a second glass sheet is then applied.

It is possible in accordance with the invention to first melt the film A onto a glass sheet over the entire area or locally by increased temperature and to then cover this with the film B. Alternatively, films A and B can be positioned jointly between two glass sheets and melted at increased temperature.

The lamination step for producing a laminated glass is preferably carried out such that films A and B are positioned between two glass sheets and the layered body thus prepared is pressed under increased or reduced pressure and increased temperature to form a laminate.

To laminate the layered body, the methods with which a person skilled in the art is familiar can be used with and without prior production of a pre-laminate.

So called "autoclave processes" are carried out at an increased pressure from approximately 10 to 15 bar and temperatures from 100 to 150 °C during approximately 2 hours. Vacuum bag or vacuum ring methods, for example according to EP 1 235 683 B1, function at approximately 200 mbar and 130 to 145 °C.

Vacuum laminators may also be used. These consist of a chamber that can be heated and evacuated, in which laminated glazings can be laminated within 30 - 60 minutes. Reduced pressures from 0.01 to 300 mbar and temperatures from 100 to 200 °C, in particular 130 - 160 °C, have proven their worth in practice.

In the simplest case, in order to produce the laminated glass laminates, film A or B is positioned on a glass sheet, and the further film B or A is positioned synchronously or subsequently. The second glass sheet is then applied and a glass film laminate is produced. Excessive air can then be removed with the aid of any pre-lamination method known to a person skilled in the art. Here, the layers are also already firstly lightly adhesively bonded to one another and to the glass.

The glass film laminate may then be subjected to an autoclave process. Film A is preferably positioned on the first glass sheet and covered by the thicker film B before the second glass sheet is applied. The method can be carried out in many conceivable and, in principle, practicable variants. For example, film A is easily removed from a roll of an appropriate width, whereas film B has been tailor-cut beforehand to the size of the laminated glass to be produced. This is advantageous in particular in the case of windscreens and other automotive glazing parts. In this case, it is particularly advantageous to additionally still stretch the thicker film B before it is tailor cut. This enables a more economical use of film, or, for the case in which film B has a colour tint, allows the adaptation of the curvature thereof to the upper sheet edge.

It is also possible for the films B to have a wedge-shaped thickness profile. The laminated glass laminate according to the invention obtains a wedge-shaped thickness profile even with plane-parallel thickness profile of the film A and can be used in motor vehicle windscreens for HUD displays.

Furthermore, film B may comprise at least two layers wherein the amount of plasticizer WB in the layers differs by least 2 % by weight. For sound-damping purposes, film B comprises 3 layers of which the core layer is softer due to higher plasticizer content.

Another aspect of the present invention concerns an adhesive film for a laminated glass comprising a film A containing a polyvinyl acetal PA and less than 10 % by weight plasticiser and a film B containing polyvinyl acetal PB and at least 22 % by weight plasticiser; characterised in that
- film A is provided with an obscuration area (1) having at least one area (2) embedded therein
   o wherein obscuration area (1) and the at least one area (2) have a transmission in the visible spectrum from 380 nm to 780 nm of less than 20% and
   o wherein the at least one area (2) has a transmission for infrared radiation from 850 nm to 1200 nm of more than 80% and
   o wherein the obscuration of the obscuration area (1) and the obscuration of the at least one area (2) are provided by a printed or coated layer on at least one surface of film A.

### Use of the laminate

The laminated glass according to invention may be used for windscreens, back-lights and side glazing for cars, busses, trucks, ships or airplanes.

## Claims

1. A laminated glass comprising two sheets of glass, combined by an adhesive film comprising a film A containing a polyvinyl acetal PA and less than 20 % by weight plasticiser and a film B containing polyvinyl acetal PB and at least 22 % by weight plasticiser; **characterised in that**
- film A is provided with an obscuration area (1) having at least one area (2) embedded therein
o wherein obscuration area (1) and the at least one area (2) have a transmission in the visible spectrum from 380 nm to 780 nm of less than 20% and
o wherein the at least one area (2) has a transmission for infrared radiation from 850 nm to 1200 nm of more than 70% and
o wherein the obscuration of the obscuration area (1) and the obscuration of the at least one area (2) are provided by a printed or coated layer on at least one surface of film A.

2. The laminated glass according to claim 1, **characterised in that** obscuration area (1) and the at least one area (2) have a transmission in the visible spectrum from 380 nm to 780 nm of less than 10%.

3. The laminated glass according to claim 2, **characterised in that** the at least one area (2) has a transmission for infrared radiation from 850 nm to 1200 nm of more than 80%.

4. The laminated glass according to any of the claims 1 to 3, **characterised in that** the at least one area (2) has a transmission for infrared radiation from 850 nm to 1200 nm of more than 70%.

5. The laminated glass according to any of the claims 1 to 4, **characterised in that** the obscuration of the obscuration area (1) and of the at least one area (2) is provided by a printed layer on at least one surface of film A and the printed layer comprises a dried printing ink.

6. The laminated glass according to claim 5, **characterised in that** the printed layer in the obscuration area (1) comprises a different printing ink than the printed area in the at least one area (2).

7. The laminated glass according to claim 5 or 6, **characterised in that** the printing ink in the at least one area (2) comprises a perylene pigment, preferably N,N'-dimethylperylenedicarboxylic acid diimide (MPTCDI) or perylene tetracarboxylic acid dianhydride (PTCDA).

8. The laminated glass according to claim 7, **characterised in that the** printed area in the obscuration area has an L* value in the L,a,b system of less than 10.

9. The laminated glass according to any of the claims 1 to 8, **characterised in that** the obscuration area (1) has at least one area (3) with a transmission in the visible spectrum from 380 nm to 780 nm of more than 80% embedded therein.

10. The laminated glass according to any of the claims 1 to 9, **characterised in that** thickness ratio of film A to film B is less than 0.2.

11. The laminated glass according to any of the claims 1 to 10, **characterised in that** film B comprises at least two layers wherein the amount of plasticizer WB in the layers differs by least 2 % by weight.

12. The laminated glass according to any of the claim 1 to 11, **characterised in that** the film B has a wedge-shaped thickness profile.

13. The laminated glass according to any of the claims 1 to 12, **characterised in that** the at least one area (3) is provided with optical detection devices positioned at or on one surface of the glass sheet.

14. The laminated glass according to any of the claims 1 to 13, **characterised in that** the at least one area (2) is provided with a scanning laser device (LIDAR) positioned at or on one surface of the glass sheet.

15. An adhesive film for a laminated glass comprising a film A containing a polyvinyl acetal PA and less than 10 % by weight plasticiser and a film B containing polyvinyl acetal PB and at least 22 % by weight plasticiser; **characterised in that**
- film A is provided with an obscuration area (1) having at least one area (2) embedded therein
o wherein obscuration area (1) and the at least one area (2) have a transmission in the visible spectrum from 380 nm to 780 nm of less than 20% and
o wherein the at least one area (2) has a transmission for infrared radiation from 850 nm to 1200 nm of more than 80% and
o wherein the obscuration of the obscuration area (1) and the obscuration of the at least one area (2) are provided by a printed or coated layer on at least one surface of film A.
